Europäisches Patentamt

European Patent Office

Office européen des brevets

(11) Publication number: 0 402 135
A2

# (12) EUROPEAN PATENT APPLICATION

(21) Application number: 90306188.5

(51) Int. Cl.⁵: H04N 9/87

(22) Date of filing: 07.06.90

(30) Priority: 08.06.89 JP 146506/89
06.10.89 JP 260111/89

(43) Date of publication of application:
12.12.90 Bulletin 90/50

(84) Designated Contracting States:
DE FR GB NL

(71) Applicant: Kabushiki Kaisha Toshiba
72, Horikawa-cho Saiwai-ku
Kawasaki-shi(JP)

(72) Inventor: Kizu, Shigeo,(C/o Intellectual
Property Division
Kabushiki Kaisha Toshiba, 1-1 Shibaura
1-chome
Minato-ku, Tokyo 105(JP)
Inventor: Endoh, Naoki, C/o Intellectual
Property Division
Kabushiki Kaisha Toshiba, 1-1 Shibaura
1-chome
Minato-ku, Tokyo 105(JP)
Inventor: Nagoya, Tetsuo, C/o Intellectual
Property Division
Kabushiki Kaisha Toshiba, 1-1 Shibaura
1-chome
Minato-ku, Tokyo 105(JP)
Inventor: Yamamoto, Norihiro, C/o Intellectual
Property Div.
Kabushiki Kaisha Toshiba, 1-1 Shibaura
1-chome
Minato-ku, Tokyo 105(JP)
Inventor: Matsumura, Yoshikuni C/o
Intellectual Property Div
Kabushiki Kaisha Toshiba, 1-1 Shibaura
1-chome
Minato-ku, Tokyo 105(JP)

(74) Representative: Freed, Arthur Woolf et al
MARKS & CLERK 57-60 Lincoln's Inn Fields
London WC2A 3LS(GB)

(54) Picture reproducing apparatus and method.

(57) A picture reproducing apparatus includes a video signal reproducing circuit (3) for reproducing a video signal recorded in a video tape, and an image memory (6) for storing at least a one-frame video signal. In a normal reproduction operation, a video signal from the video signal reproducing circuit is output to a monitor. In a search operation, a video signal stored in the memory (6) is selected and output to the monitor (18).

EP 0 402 135 A2

F I G. 1

## Picture reproducing apparatus and method

The present invention relates to a picture reproducing apparatus and method for reproducing a video signal recorded in a tape-like recording medium and, more particularly, to a picture reproducing apparatus capable of reproducing a still image.

A video tape recorder (to be referred to as a VTR hereinafter) is a typical apparatus for recording and reproducing a video signal. The VTR uses a recording medium in which a long magnetic tape is wound around reels, and hence has a very large recording capacity in comparison with other apparatuses using disk-like media and the like. However, the drawback of the VTR is that search and rewind operations take much time.

Recently, VTRs have been increasingly used for the advertisement of articles and various types of services than improvement in image quality, operability, and stability of the VTRs. Such a trend is expected to become more conspicuous as a television system such as a Hi-vision system (one of the HDTV format), which can ensure much higher resolution than a current television system and can be satisfactorily used for a large screen, is employed. When a VTR is used for advertisement and various services, since a long period of time is required for search and rewind operations, the effects of advertisement or various services are degraded.

In a conventional system, therefore, an auxiliary unit such as a still image unit or a character generator is arranged outside the VTR, and an image reproduced by the VTR and an output image from the auxiliary unit are manually or automatically switched to be displayed on a display unit. In a so-called video information system used in, e.g., an air terminal, an image reproduced by a VTR and an image picked up by a video camera are selectively switched to be displayed on a monitor.

As described above, when a VTR is to be used for advertisement and various services, the conventional system employs the method of switching and displaying an image reproduced by the VTR and an output image from an auxiliary unit such as a still image unit or a character generator. However, such a system inevitably becomes complicated and is increased in size and cost.

It is an object of the present invention to provide a picture reproducing apparatus which can output still image information during a search operation or a rewind or fast forward operation or the like with a simple arrangement.

According to the present invention, there is provided a picture reproducing apparatus which comprises a picture memory constituted by a semiconductor memory for storing at least a one-frame or one-field video signal in addition to a video signal reproducing unit for reproducing a video signal recorded in a tape-like recording medium, and can selectively switch and output the video signal stored in the memory and the video signal reproduced by the video signal reproducing unit.

A video signal may be written in the picture memory by an external unit of the picture reproducing apparatus. Alternatively, in addition to a switch (first switch), the apparatus may include a second switch for selectively switching and outputting a video signal input from an external video signal source and a video signal reproduced by the video signal reproducing unit. In this case, a video signal is written in the picture memory through the second switch.

The picture memory may be fixed in the picture reproducing apparatus such as a VTR, or may be designed as a detachable memory in such a manner that at least the semiconductor memory portion is formed into a memory card or a memory pack.

While a search or rewind operation is performed to reproduce a desired signal of video signals recorded in the tape-like recording medium, no perfect reproduced signal is obtained from the recording medium. In such a case, a mode for selecting an output signal from the picture reproducing apparatus is automatically or manually switched to a mode for selecting an output signal from the picture memory by means of the switch (first switch).

In this manner, during a search operation or a review or rewind operation, a video signal read out from the picture memory is displayed in place of a video signal reproduced from the recording medium, thus preventing interruption of display. In addition, since a video signal which is output during a search or rewind operation is a signal from the picture memory incorporated in the picture reproducing apparatus, no external auxiliary unit is required. Therefore, the present invention is advantageous in terms of an installation space and cost.

Furthermore, arbitrary picture data required by a user can be written in the picture memory through the second switch.

Moreover, according to the present invention, there is provided a picture reproducing apparatus for sequentially reproducing a video signal recorded in a tape-like recording medium, sequentially and temporarily storing the reproduced video signal in a memory while performing predetermined processing thereof, and reproducing the recorded signal by sequentially reading out the video signal from the memory in a reproduction mode, and for stopping a write operation of a video signal to the memory, causing the memory to hold a video signal of at least one frame away from a frame at which the write operation is stopped, in a backward direction, and reading out the video signal held in the memory as a still image in a still mode.

While a search or rewind operation is performed to reproduce a desired signal from video signals stored in the tape-like recording medium, no normal image can be obtained from the recording medium. In order to solve such a problem, a memory arranged for predetermined processing of a reproduced video signal, such as time axis compression, time axis expansion, time axis correction, and de-shuffling, is effectively used in the following manner. When search of a video signal or a rewind operation is to be performed, a video signal of at least one frame away from a frame, at which a write operation is stopped, in a backward direction is stored in the memory, and the contents of the memory are displayed as a still image during this period. With this operation, interruption of picture display can be prevented without arranging a special unit. Therefore, the present invention is effectively applied to a system used for a showroom and a system for providing various types of services through a monitor.

This invention can be more fully understood from the following detailed description when taken in conjunction with the accompanying drawings, in which:

Fig. 1 is a block diagram showing a picture reproducing apparatus according to the first embodiment of the present invention;

Fig. 2 is a block diagram showing a detailed arrangement of a main part in Fig. 1;

Fig. 3 is a perspective view of the picture reproducing apparatus of the first embodiment;

Fig. 4 is a block diagram showing a picture reproducing apparatus using a generally used digital memory according to another embodiment of the present invention;

Fig. 5 is a block diagram showing a picture reproducing apparatus for outputting a digital video signal according to still another embodiment;

Fig. 6 is a block diagram showing a picture reproducing apparatus including a memory capable of recording an external video signal according to still another embodiment;

Fig. 7 is a view for explaining an amount of data per one frame of still picture;

Fig. 8 is a block diagram of the memory card;

Fig. 9 is a view showing a data recording format of the memory card;

Fig. 10 is a block diagram showing a data reader for reading out data from the memory card;

Fig. 11 is a block diagram showing a picture reproducing apparatus for recording part of a reproduced image as a still image in a memory incorporated in a reproduced signal processor according to still another embodiment of the present invention;

Fig. 12 is a block diagram showing a recording signal processing unit for recording a video signal on a magnetic tape;

Fig. 13 is a timing chart showing part of a video signal waveform;

Fig. 14 is a block diagram showing a memory and a memory control circuit according to the embodiment of Fig. 11;

Fig. 15 is a view for explaining an operation of the picture reproducing apparatus of the present invention;

Figs. 16 and 17 are flow charts for explaining an operation of the picture reproducing apparatus of the present invention;

Fig. 18 is a timing chart for explaining an operation of the circuit shown in Fig. 14;

Fig. 19 is a circuit diagram showing a peripheral circuit of a memory added to the picture reproducing apparatus in Fig. 11; and

Figs. 20 and 21 are views showing a format of a magnetic tape.

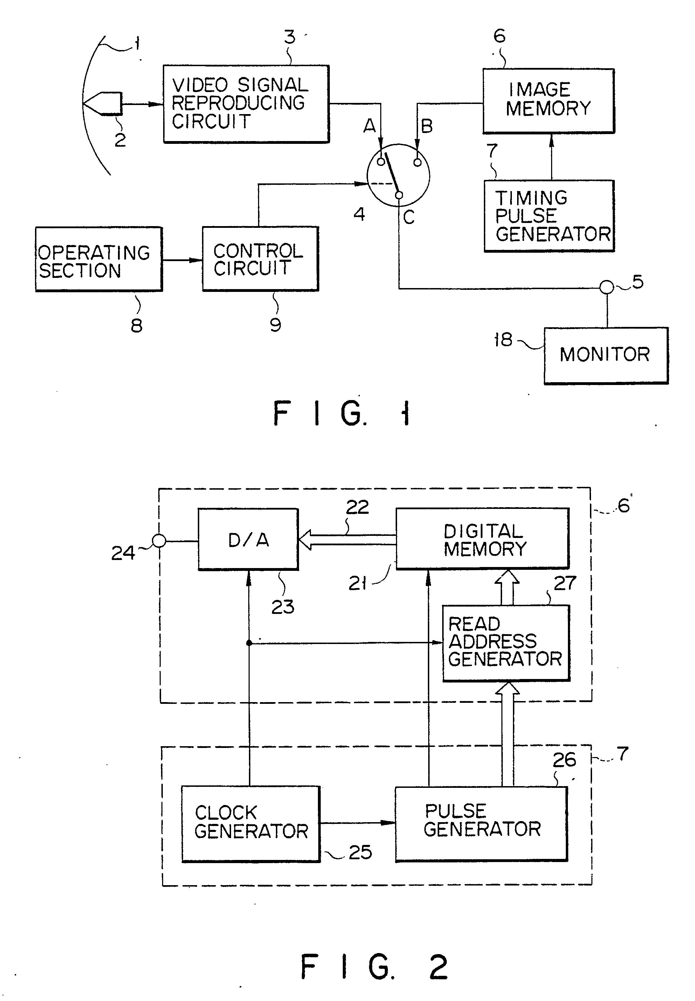

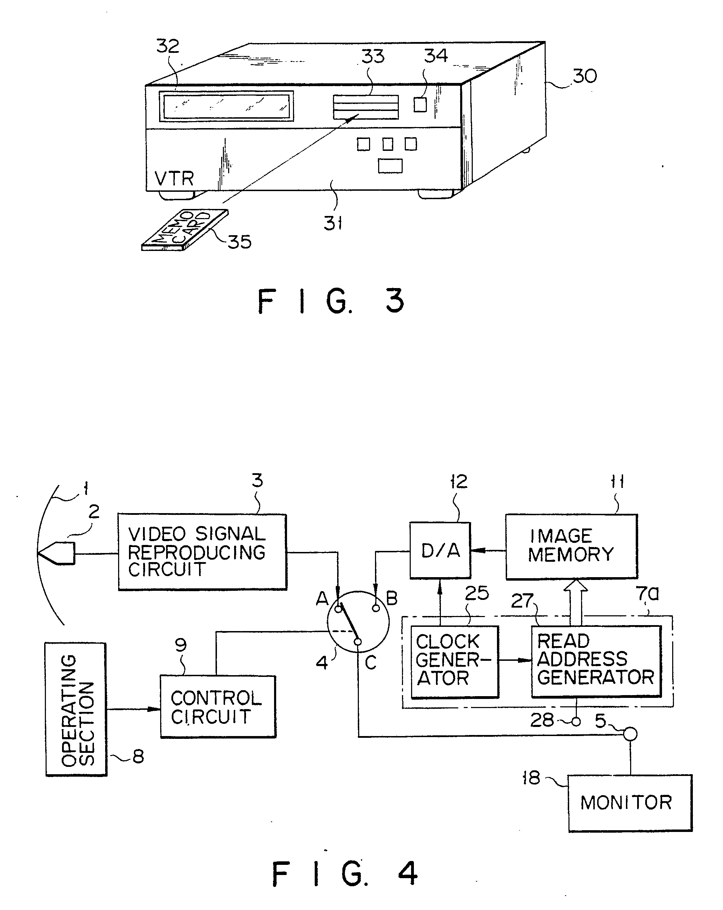

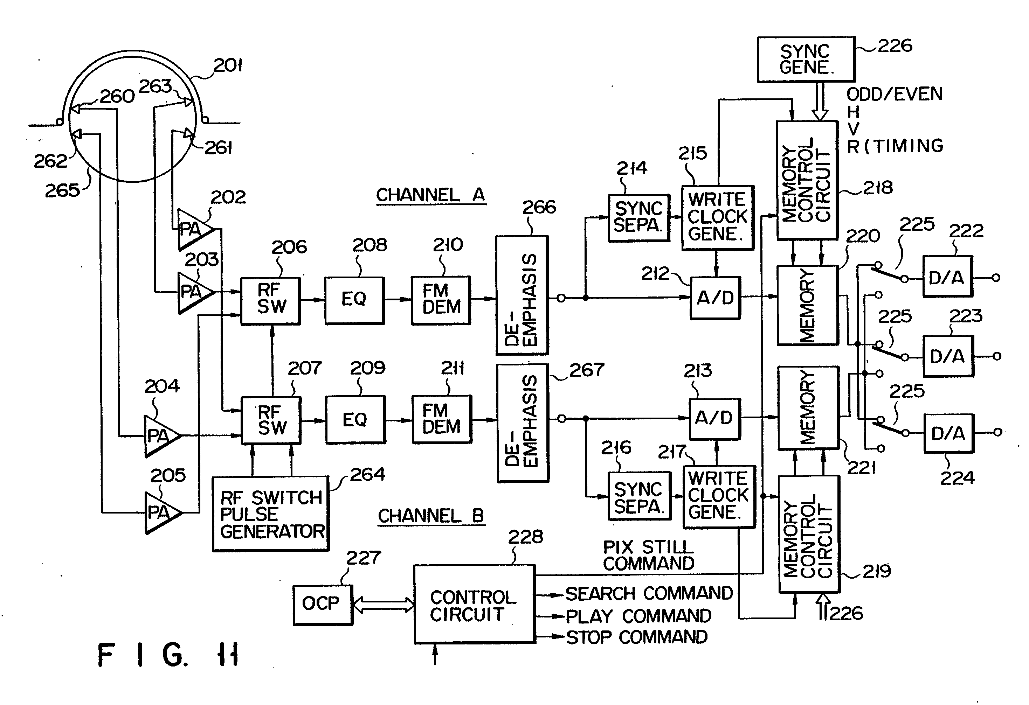

According to an embodiment shown in Fig. 1, a video head 2 which is brought into contact with a magnetic tape 1 is connected to a video signal reproducing circuit 3. This video signal reproducing circuit 3 has the circuit arrangement similar to that shown in Fig. 11, and is designed to perform signal processing, such as amplification, equalization, and demodulation, of a video signal read from the magnetic tape 1. The reproduction output terminal of the video signal reproducing circuit 3 is connected to a contact A of a switch 4. Contacts B and C of the switch 4 are respectively connected to an image memory 6 and a video signal output terminal 5. The image memory 6 is a memory capable of storing at least one-frame video signal. A predetermined video signal is written in the image memory 6 in advance. As shown in Fig. 3, the image memory 6 is constituted by a semiconductor memory card 35 constituted by a semiconductor memory and is designed to be detachably mounted in a VTR main unit 30. Readout control of the image memory 6 is performed by timing pulses from a timing pulse generator 7. The switch 4 is controlled by signals from a control circuit 9. The control circuit 9 generates a switch signal in response to an operation signal from an operating section 8.

In the above-described picture reproducing apparatus, when a reproduction mode, i.e. movie reproduction mode is selected, the video signal which is recorded in the magnetic tape 1 in advance is read by the video head 2. The read video signal is input to the video signal reproducing circuit 3 and is subjected to signal processing such as amplification, equalization, and demodulation. The processed signal is then output from the video signal reproducing circuit 3 as a reproduced video signal.

The reproduced video signal output from the video signal reproducing circuit 3 is output from the picture output terminal 5 to an external unit, such as a monitor, through the contacts A and C of the switch 4.

The operating section 8 is designed to perform the basic operations of the VTR, such as "power source ON/OFF", "reproduce", "fast forward", "rewind", "stop", and "eject". A signal from this operating section 8 is supplied to the control circuit 9. The switch 4 is controlled by a signal from the control circuit 9. While the VTR performs a search operation or a rewind operation, the switch 4 is switched to the contact B on the image memory 6 side and outputs the video signal read out from the image memory 6 to the video signal output terminal 5. The video signal output terminal 5 is connected to a monitor 18 for displaying the video signal as a still image.

According to the block diagram of Fig. 2 showing the image memory 6 and the timing pulse generator 7, the image memory 6 has a digital memory 21 constituted by a semiconductor memory, a D/A converter 23, and a read address generator 27. The read address generator 27 generates an address signal for sequentially reading out video signal data stored in the digital memory 21 from the upper left end to the lower right end of the screen in units of 8 bits, in response to the pulses output from the pulse generator 27. A one-frame video signal quantized as, e.g., 8-bit digital data is written in the digital memory 21. An output from the digital memory 21 is input to the D/A converter 23 through a data line 22 so as to be converted into an analog signal, and is output from an output terminal 24.

The timing pulse generator 7 comprises a clock generator 25 and a pulse generator 26. The clock generator 25 generates a fundamental clock for driving the D/A converter 23 and the pulse generator 26.

In this embodiment, when the switch 4 is switched from the contact A to the contact B, that is, a still mode is selected, the stored video signal data is read out from the image memory 6 so as to start from the upper left end of the screen in synchronism with the pulses of the pulse generator 26. With this operation, time continuity between the video signals from the reproducing circuit 3 and from the image memory 6 is obtained.

In the VTR shown in Fig. 3, an operation panel 31 including the operating section 8 in Fig. 1, a video tape cassette insertion slot 32, a memory card insertion slot 33, and a memory card eject button 34 are arranged on the front surface of the VTR main body 30.

The memory card 35 is formed by mounting the image memory 6 in Fig. 1 on a card-like board. When this memory card 35 is inserted into the memory card insertion slot 32 as indicated by an arrow in Fig. 3, the video signal can be read out from the memory 6. When the memory card 35 is to be replaced, the memory card 35 is ejected by depressing the memory card eject button 34, and a new memory card is inserted in the slot 32. For example, the technique disclosed in USP 4,837,624 can be applied to the structure for connecting of the memory card to the timing pulse generator 7 and the other.

According to a picture reproducing apparatus of another embodiment shown in Fig. 4, an image memory 11 is constituted only by a digital memory, and a D/A converter 12 is arranged on the output side of the image memory 11. A timing pulse generator 7a has a clock generator 25 and a read address generator 26, which respectively supplies a read address signal and a clock signal to the image memory 11 and the D/A converter 12. The read address generator 27 includes a preset terminal 28 supplied with a read start timing signal for determining a read start timing of data from the memory 11. In this embodiment, when a switch 4 is switched to a contact B, a still image signal stored in the built-in image memory 11 is read out by the read addresses generated from the address generator 27 in response to the read start timing signal, and is converted into an analog image signal by the D/A converter 12. The analog image signal is then supplied to a monitor 18 through a terminal 5 so as to be displayed thereon as a still image.

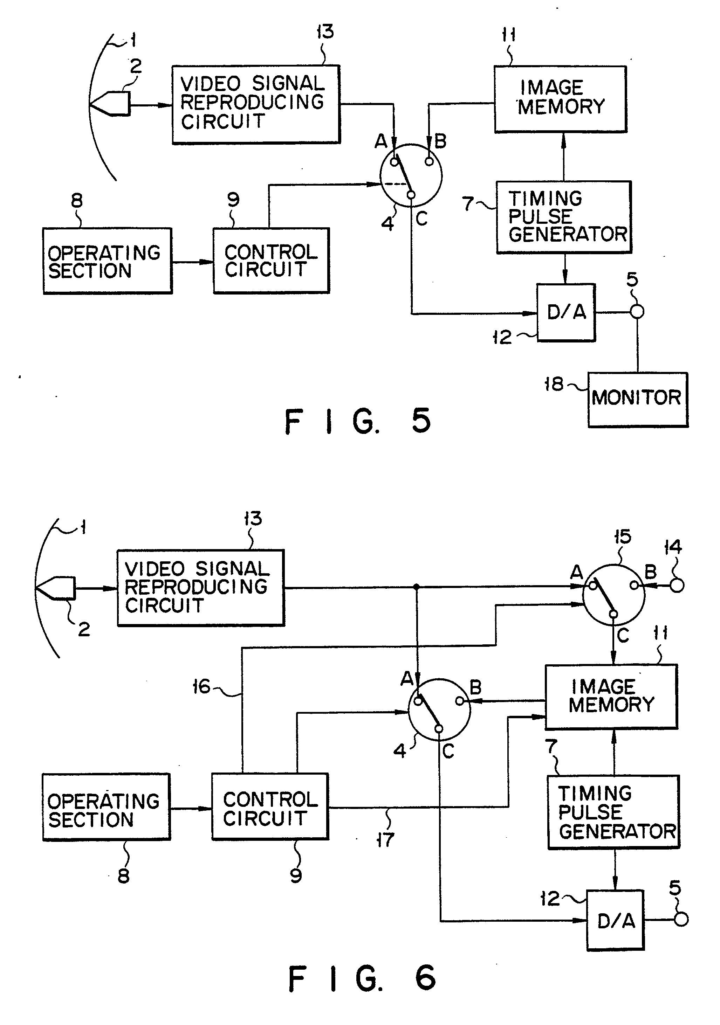

According to still another embodiment shown in Fig. 5, a video signal reproducing circuit 13 incorporates a known digital video signal processor for time axis correction and special effects. This video signal reproducing circuit 13 outputs a video signal which is converted into a digital signal similar to an output signal from an image memory 11 constituted by a digital memory. When a switch 4 is switched to a contact A, this reproduced digital video signal is supplied to a D/A converter 12 through the switch 4 and is converted into an analog signal. The analog signal is then output to a monitor 18 through an output terminal 5. While the switch 4 is switched to a contact B during, e.g., a rewind/search operation, a still image signal stored in the image memory 11 is read out in response to a timing pulse from a timing pulse generator 7, and is input to the monitor 18 through the switch 4 and the D/A converter 12 so as to be displayed as a still image.

According to the embodiment shown in Fig. 5, since an output signal from the image memory 11 constituted by the digital memory is converted into an analog signal by using the D/A converter 12 which is built in the VTR incorporating the digital video signal processor, a D/A converter need not be added. Hence, the arrangement can be simplified, and the cost can be reduced.

In still another embodiment shown in Fig. 6, a video signal can be written in an image memory 11.

More specifically, in addition to the arrangement shown in Fig. 5, this embodiment includes a video signal input terminal 14 for receiving a digital video signal from an external video signal source, and a switch 15 for selectively outputting a video signal input from the picture input terminal 14 and a reproduced digital video signal from a video signal reproducing circuit 13.

The switch 15 is switched by a switch signal from a control circuit 9 in the same manner as in the switch 4. In addition, write and read operations with respect to an image memory 11 are switched by a memory mode switch signal 17 from the control circuit 9. Similar to a read address signal, a write address signal is supplied from a timing pulse generator 7 to the image memory 11. A read operation of the image memory 11 is performed in the same manner as in the embodiment shown in Fig. 5.

According to the embodiment shown in Fig. 6, a user can write a desired, arbitrary video signal in the image memory 11 by switching the switch 15 and setting the image memory 11 in a write mode by using the memory card switch signal 17. When a portion of a signal recorded in a tape 1 is to be displayed as a still image during, e.g., search or rewinding of the tape 1, the image signal is written from the video signal reproducing circuit 13 into the image memory 11 while the switch 15 is switched to the video signal reproducing circuit 13 side, i.e., a contact A. When a video signal other than the video signal recorded in the tape 1 is to be displayed during a search or rewind operation, an external video signal is written in the image memory 11 while the switch 15 is switched to the picture input terminal 14 side, i.e., a contact B.

In the embodiment shown in Fig. 6, since a user can perform a rewrite operation with respect to the image memory 11, a detachable memory card as employed in the previous embodiments need not be used. That is, a fixed built-in memory of the VTR may be used as the image memory 11.

An apparatus using a memory card will be described below by exemplifying a 1/2-inch Hi-vision VTR.

A video signal used by the 1/2-inch Hi-vision VTR is a component video signal containing a luminance signal (Y) having a signal bandwidth of 20 MHz and two color difference signals (Pb, Pr) each having a signal bandwidth of 7 MHz.

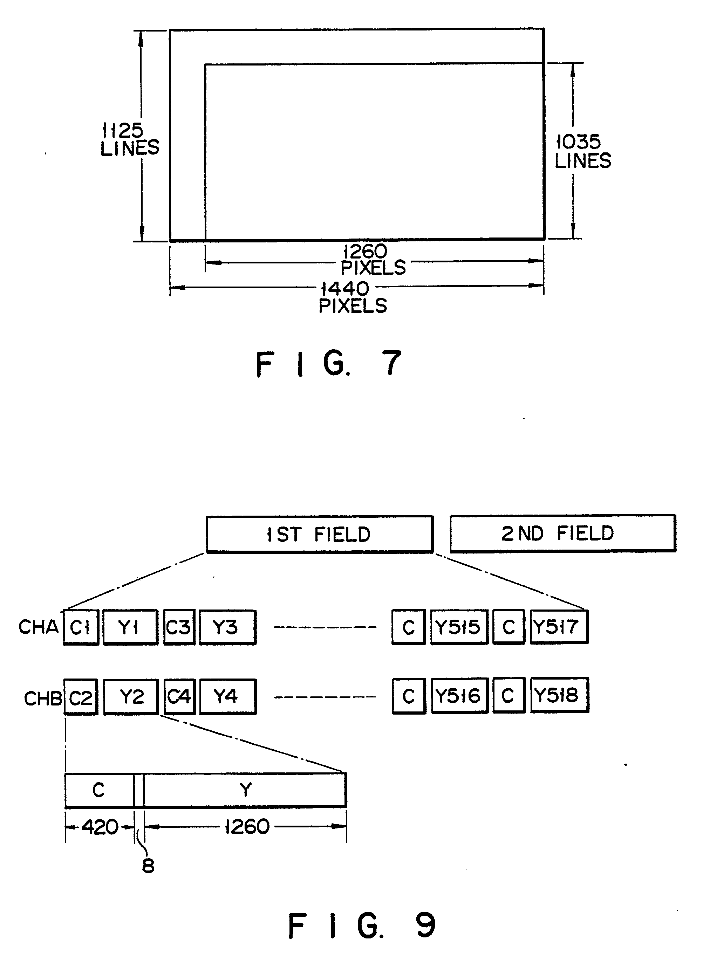

Fig. 7 shows a Y signal of one-frame (1/30 sec) video signal. When a video signal is to be subjected to digital signal processing in the VTR, the Y signal is sampled at 48.6 MHz, and each of the Pb and Pr signals is sampled at 6.2 MHz corresponding to 1/3 the sampling frequency of the Y signal. The Y signal is sampled 1,440 times per line. Of the 1,440 samples, 1,260 samples are used as effective pixel data. Each of the Pb and Pr signals is sampled 480 times per line. Of the 480 samples, 420 samples are used as effective pixels.

A Hi-vision signal includes 1,125 vertical lines. Of these lines, 1035 lines are used as effective lines. With regard to the Pb and Pr signals, since the data are compressed and are interlaced to obtain a line sequential signal, the number of effective lines per frame is 1,035/2.

Since the respective samples are converted into bits, the sum of the one-frame effective pixel data is $\{(1,260 \times 1,035) + (420 \times 1,035/2) + (420 \times 1,035/2)\} \times 8 = 13,910,400$ bits/frame (about 14 Mbits).

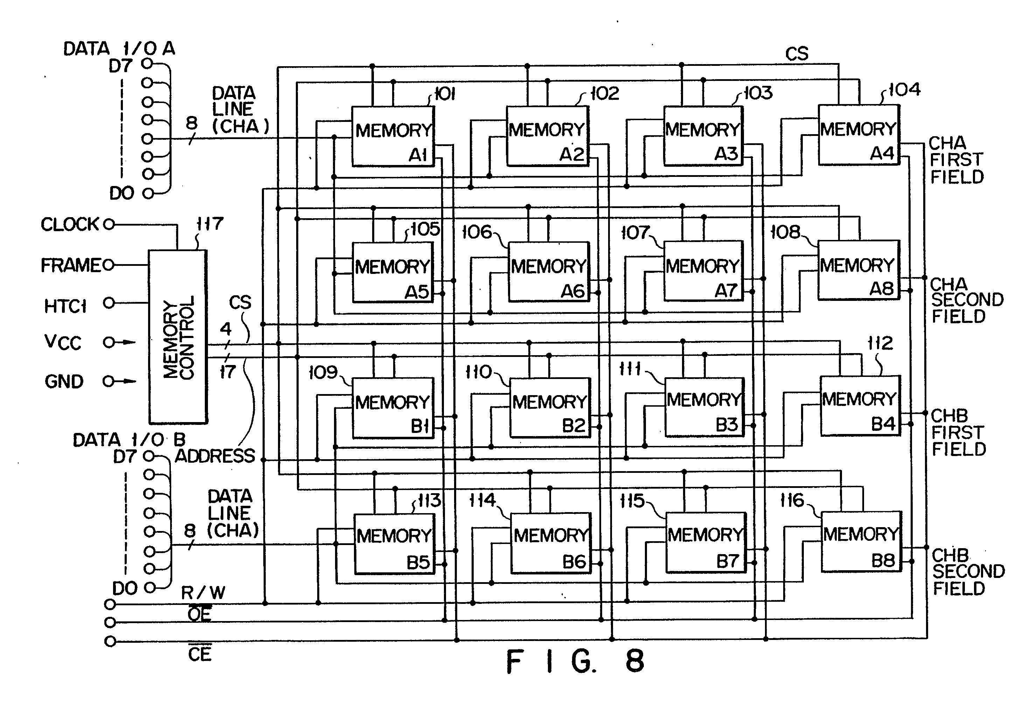

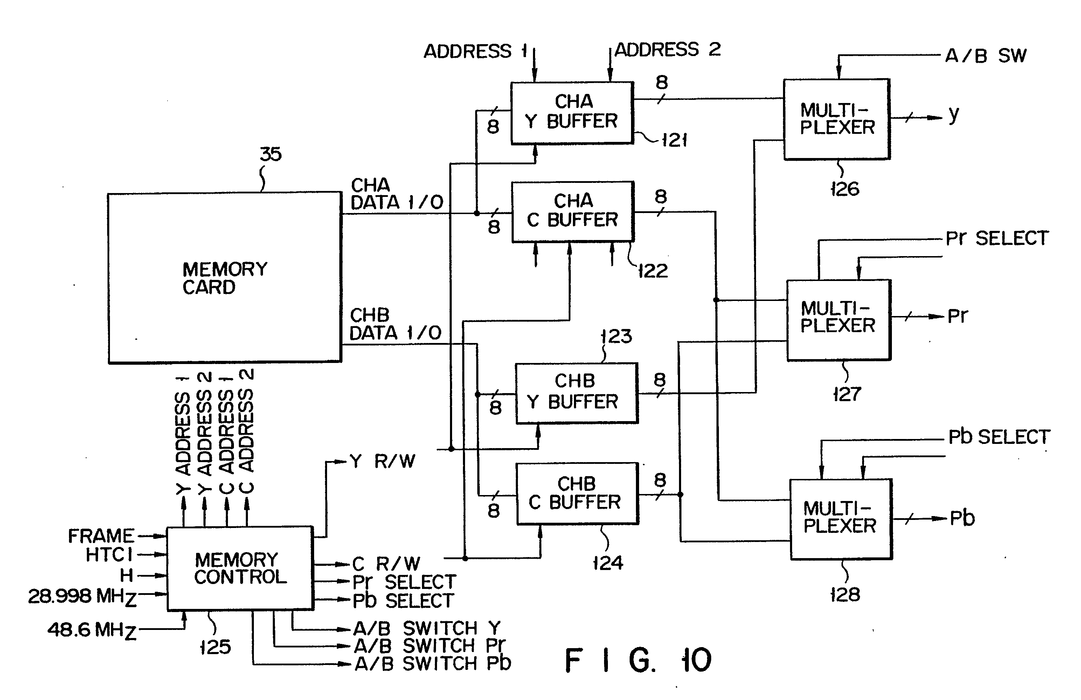

Fig. 8 shows an internal structure of the memory card 35. According to this structure, the memory card 35 comprises a matrix of 16 EEPROMs (ELECTRIC ERASABLE PROGRAMMABLE ROMs) 101 to 116 each having a capacity of 28 Kbytes, and a memory controller 117 connected to these EEPROMs. A video signal is distributed to two channels A and B, and is stored in the memory card 35 in units of first and second fields. More specifically, each row of the EEPROMs corresponds to one field of one channel. The video signal is stored in the memory card 35 in accordance with a format shown in Fig. 9. According to the format in Fig. 9, 518 horizontal data (H data) each containing a pair of a color difference signal C and a Y signal are alternately assigned to the first field of the channel A (CHA) and the first field of the channel B (CHB) so as to be stored in the memory card 35.

In the memory card 35 having the above-described arrangement, in response to external vertical and horizontal pulses, the memory controller 117 outputs address signals A and B (each consisting of 17 bits) and a chip select signal CS (consisting of 4 bits), and the memory cells are accessed by these signals A, B, and CS. As a result, video signal is written or read out in or from the memory card 35. More specifically, if a READ/WRITE signal is at low level, a video signal is written. If the READ/WRITE signal is at high level, a video signal is read out. In this case, an 8-bit data line is used for both data input and output, and input and output modes are switched by an OUTPUT ENABLE signal.

Fig. 10 shows an external unit for reading video signals from the memory card 35, i.e., a memory card read unit incorporated in the VTR 30 shown in Fig. 3. This unit comprises Y and C signal buffers 121 to 124 for the respective channels A and B. Each buffer has a capacity corresponding to 2 H. While a 1-H video signal is stored in a half storage area of each buffer, 1-H write data (video signal) is read out from the other half storage area. That is, in each buffer, read and write operations are alternately performed. In this case, write control of both the Y and C buffers is performed by an address signal having a rate of 28.998 MHz. In contrast to this, read control for a Y signal is performed by an address signal having a rate of 48.6 MHz, and that for a C signal is performed by an address signal having a rate of 16.2 MHz. In this case, an address line is commonly used for read and write operations. When addresses 1 and 2 of the respective storage areas of each buffer is switched by a memory controller 125, the write and read modes of the address line are switched.

Outputs from the CHA-Y buffer 121 and the CHB-Y buffer 123 are input to a multiplexer 126, and both outputs from the CHA-C buffer 122 and the CHB-C buffer 124 are input to multiplexers 127 and 128. The multiplexers 126 to 128 are switched by an A/B switch signal output from the memory controller 125, and alternately output Y signals and color difference signals Pr and Pb of the channels A and B.

As described above, according to the present invention, the VTR comprises the image memory having the semiconductor memory capable of storing at least a 1-frame video signal, and a signal read out from the video memory and a reproduced video signal from a tape-like recording medium can be selectively output and displayed. This can solve the conventional problem which is caused when VTRs are used for advertisement and various services, i.e., that the display is interrupted during a search or rewind operation, resulting in degradation of the effects of advertisement and services.

In addition, since no auxiliary unit using a video camera and the like need be arranged outside the VTR, only a small installation space is required, and the cost in use can be greatly reduced.

In the embodiment shown in Fig. 6, a digital video signal is input from the video signal input terminal 14. However, an analog video signal may be input and converted into a digital signal by an A/D converter incorporated in the VTR so as to be written in the image memory 11.

Moreover, special memories need not be used as the image memories 6 and 11. For example, a frame memory incorporated in the video signal reproducing circuit 13 including the digital video signal processor may be used in place of the image memories 6 and 11 so as to be used for the reproduction of a still image during a search/rewind operation.

Still another embodiment will be described below with reference to Fig. 11.

A recording signal processing unit for recording an FM video signal in a magnetic tape 201 in Fig. 11 will be described below prior to the description of this embodiment.

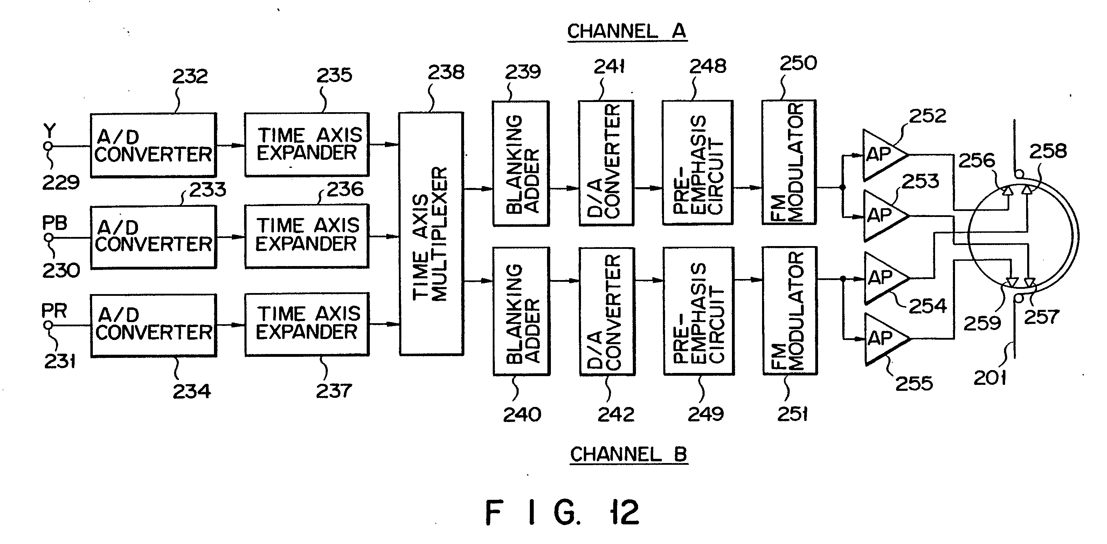

Fig. 12 shows a recording signal processing unit. In this processing unit, a luminance signal Y and two types of color difference signals Pb and Pr constituting a Hi-vision television signal are respectively input to video signal input terminals 229, 230, and 231. These signals Y, Pb, and Pr are converted into digital signals by A/D converters 232, 233, and 234. The luminance signal Y output from the A/D converter 232 is subjected to time axis expansion in a time axis expander 235. The color difference signals Pb and Pr output from the A/D converters 232 and 233 are subjected to time axis compression in time axis compressors 236 and 237, respectively. Subsequently, the output signals from the expander 235 and the compressors 236 and 237 are supplied to a time axis multiplexer 238. The luminance signal Y and the color difference signals Pr and Pb are then subjected to time axis multiplexing so as to be formed into a so-called TCI signal, and shuffling of the video signal is performed. In this case, the TCI signal is separated into portions for a channel A including components from a blanking adder 239 of the next stage to an FM modulator 250 and for a channel B including components from a blanking adder 240 to an FM modulator 251. After information of blanking periods is added to the separated TCI signals by the blanking adders 239 and 240, the TCI signals are supplied to D/A converters 241 and 242 and converted into analog signals again, respectively.

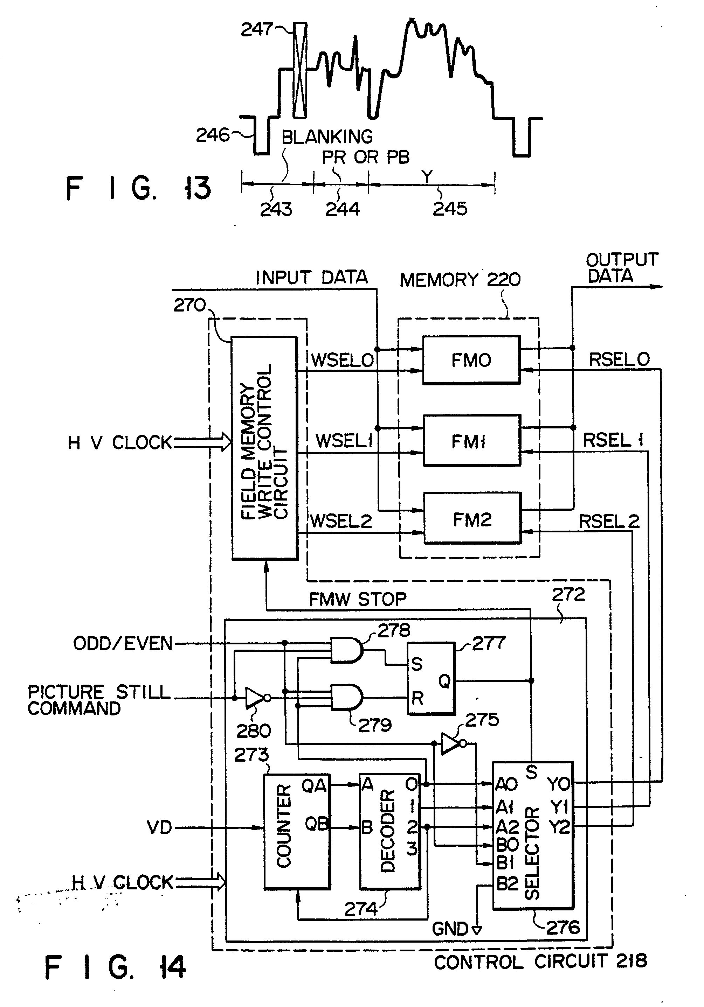

Fig. 13 shows the waveform of a video signal output from each of the D/A converters 241 and 242. Referring to Fig. 13, a time range 243 indicated by arrows represents the blanking period information; a time range 244, the color difference signal Pb or Pr; and a time range 245, the luminance signal Y. The blanking period 243 includes a sync signal 246 and burst signal 247 both of which are inserted mainly as timing references for signal processing in reproduction.

The output signals from the D/A converters 241 and 242 are respectively supplied to pre-emphasis circuits 248 and 249 so as to emphasize their high-frequency components about 3.5 times. Thereafter, the signals are respectively input to the FM modulators 250 and 251, so that carrier signals each having a center frequency of 19 MHz are frequency-modulated. The FM video signals obtained in this manner are supplied to recording amplifiers 252 to 255. The FM video signals amplified by the recording amplifiers 252 to 255 are supplied to four recording heads 256 to 259 through a rotary transformer (not shown). The signals are then recorded on a magnetic tape 201.

Fig. 11 shows a reproduced signal processing unit for reproducing the FM video signals from the magnetic tape 201 and performing signal processing of the reproduced signals. Referring to Fig. 11, the FM video signals read from the magnetic tape 201 by four magnetic heads 260 to 263 attached to a rotating drum 265 are respectively supplied to pre-amplifiers 202 to 205 through a rotary transformer (not shown). The pre-amplifiers 202 to 205 amplify the FM video signals at a sufficiently high level required for subsequent signal processing, and send them to RF switch circuits 206 and 207.

The output signals from the pre-amplifiers 202 and 204 are output as FM video signals only for a period of about 180° during which the magnetic heads 260 and 261 are in contact with the magnetic tape 201. Since these signals alternate each other, the RF switch circuit 207 switches the two signals to output them as one continuous signal. Similarly, with respect to the output signals from the pre-amplifiers 203 and 205, the RF switch circuit 206 switches the two signals from the magnetic heads 262 and 263. The switching timings of the RF switch circuits 206 and 207 are determined by pulses from an RF switch pulse generator 264.

The output signals from the RF switch circuits 206 and 207 are respectively supplied to equalizers 208 and 209 and are subjected to frequency characteristic compensation. Output signals from the equalizers 208 and 209 are respectively supplied to FM demodulators 210 and 211 and are demodulated into video signals. The video signals are then restored to the emphasis characteristics at the time of recording by de-emphasis circuits 266 and 267 and ara output from the video signal output terminals.

The video signals output from the output terminals are respectively converted into digital signals by A/D converters 212 and 213, and are temporarily stored in memories 220 and 221. Conversion clocks to the A/D converters 212 and 213 and write timings with respect to the memories 220 and 221 are determined by clock pulses which are generated from clock generators 215 and 217 in response to sync and burst signals extracted from a video signal by sync separation circuits 214 and 126.

In general, time axis correction memories are used as the memories 220 and 221. Especially, in a small cassette Hi-vision VTR of a size of 12 mm (1/2 inches) (e.g., HV8900 available from TOSHIBA CORP.), a capacity of several fields is assumed, and the respective field memories are sequentially accessed. The read timings of the memories 220 and 221 are determined by an odd/even field switch pulse, H and V sync pulses, and a read timing pulse generated by a sync signal generator 226 which receives an external sync signal. These pulses are input to memory control circuits 218 and 219 together with the write pulse from the clock generators 215 and 217, and control the memories 220 and 221. This control will be described in detail later.

In a reproduction mode (movie mode), time-axis-corrected video signals from the memories 220 and 221 are sequentially switched by switches 225 and output to D/A converters 222 to 224 in units of channels. These D/A converters 222 to 224 convert the input video signals into analog signals, and output analog luminance signals Y and color difference signals Pb and Pr.

When a picture still (still mode) is commanded by a control panel 227, i.e., by a user during the above-described reproduced signal output operation, a control circuit 228 outputs a picture still command to the memory control circuit 218 and a memory control circuit 219. In response to this command, the memory control circuits 218 and 219 inhibit input of new video signals to the memories 220 and 221, and cause the memories 220 and 221 to output frame pictures (still images) held therein at the timing when the picture still command is input.

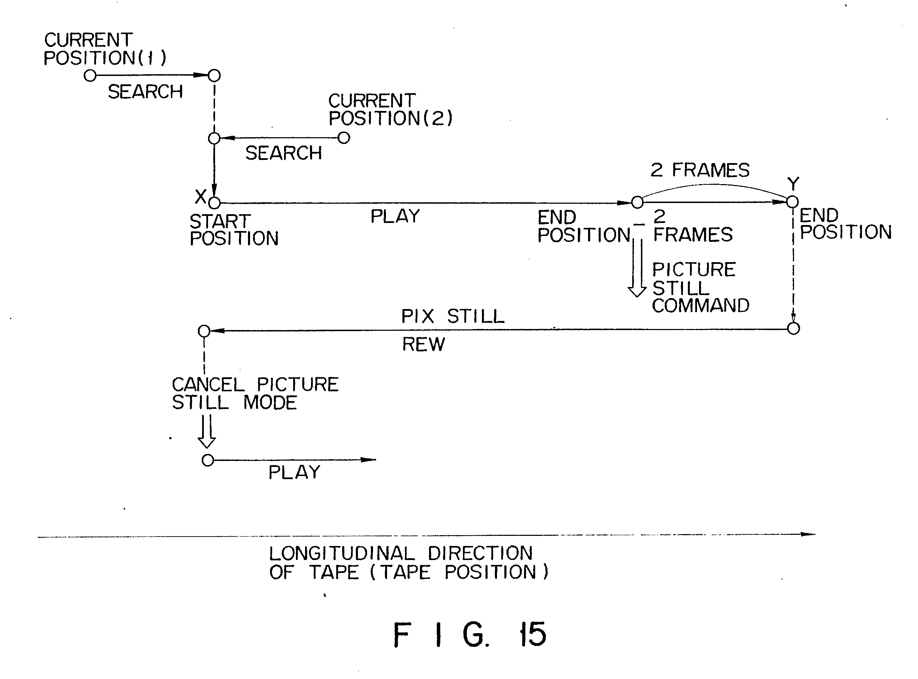

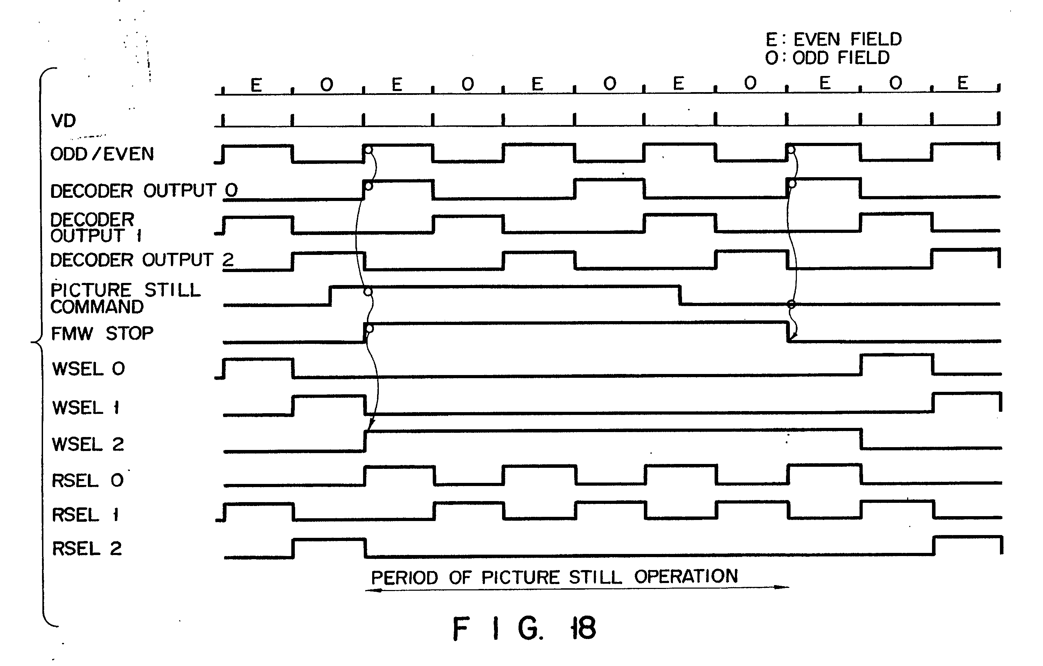

An arrangement and an operation of the peripheral circuits of the memories 220 and 221 will be described below with reference to the circuit diagram of Fig. 14 and the timing chart of Fig. 18.

The memory 220 includes field memories FM0 to Fm2 and has a capacity of 3 fields. In a normal reproduction operation, data write and read operations with respect to the field memories FM0 to Fm2 are sequentially switched to perform processing such as time axis correction. The memory control circuit 218 is constituted by a write control circuit 270 and a read control circuit 272. Write selection of video signals (input data) from the A/D converter 212 to the field memories FM0 to FM2 is sequentially performed by pulses WSEL0 to WSEL2 from the write control circuit 270. Read selection is performed by pulses RSEL0 to RSEL2 from the read control circuit 272. More specifically, a VD pulse is input to the clock terminal of a ternary counter 273, and an output from the counter 273 is decoded by a decoder 274. When outputs 0, 1, and 2 from the decoder 274 are input to a selector 276, the pulses RSEL0 to RSEL2 are output from the selector 276 to the memory 220, thus sequentially accessing the field memories FM0 to FM2.

Upon reception of the picture still command, the control circuit 218 stops the sequence of the write control circuit 270 in response to an FMWSTOP signal. More specifically, when the picture still command is input to the control circuit 218, an output from a flip-flop 277, i.e., the FMWSTOP signal is set at high level in synchronism with the leading edges of an ODD/EVEN signal as a reproduction frame pulse and the output 0 from the decoder 274 by the operation of AND gates 278 and 279 and the flip-flop 277. As a result, the write control circuit 270 stops the memory 220 from sequentially accessing the field memories FM0 to FM2, and keeps selecting the pulse WSEL2. The selector 276 selects a B input, and the pulses RSEL0 and RSEL1 are alternately accessed in units of fields. With this operation, the frame still operation of the memories FM0 to FM1 is continued until the picture still command is canceled. When the picture still command is canceled and the command signal goes to low level, the FMWSTOP signal is set at low level in synchronism with the leading edges of the ODD/EVEN signal and the output 0 from the decoder 274. As a result, the operation of the apparatus is returned to the normal, sequential access mode of the field memories FM0 to FM2.

In this embodiment, the FMWSTOP signal is generated by synchronizing the picture still command signal with the ODD/EVEN signal as a reproduction frame pulse and the output 0 from the decoder. Assume that the FMSTOP signal is generated only by the ODD/EVEN signal. In this case, in a picture still operation, three repetitive patterns, i.e., a pattern of RSEL0 and RSEL1, a pattern of RSEL1 and RSEL2, and a pattern of RSEL2 and RSEL0 are present as a memory select signal for picture still processing. If the picture still operation causes to correspond to all these three patterns, the hardware size is increased. In this case, therefore, only the pattern of the pulses RSEL0 and RESEL1 is fixed to cause the picture still command to synchtonize with the 0 output signal from the decoder. As a result, a picture still function is realized only by adding circuit elements Q75 to Q80 shown in Fig. 14.

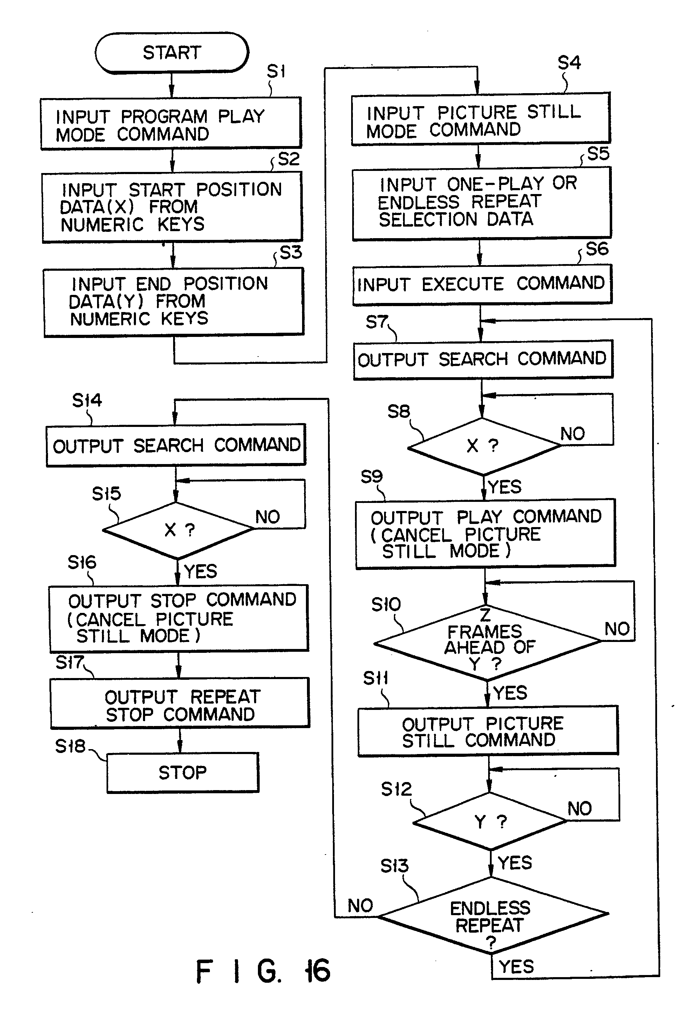

A method of effectively utilizing the above-described picture still operation will be described below. Briefly, in so-called repeat reproduction in which a video signal of a tape in a predetermined interval is repeatedly reproduced, a disturbed image is displayed or no normal image is displayed on a monitor for a period of time during which a set start position is searched or the tape is rewound to start reproduction. In this embodiment, a still image is displayed only during this period. This embodiment will be described with reference to Figs. 15 and 16.

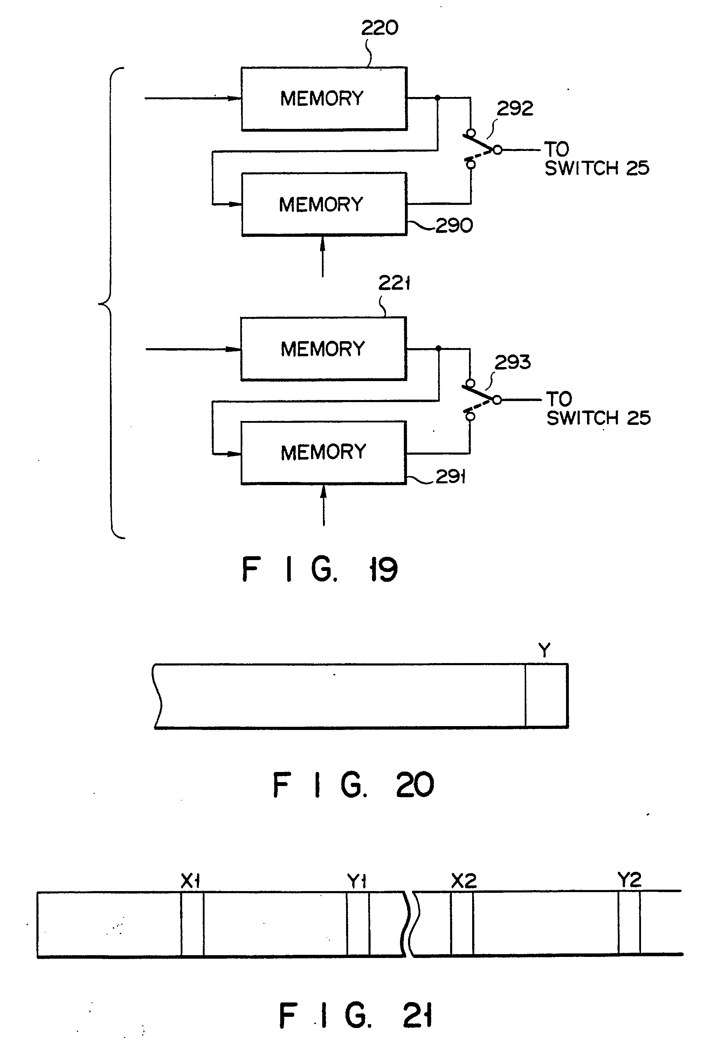

A user selects a program play with respect to the control circuit 228 in Fig. 11 through the control panel 227 in Fig. 11 (step 1). A repeat reproduction start position X of a tape is input by using numeral keys or the like (step 2). In addition, a reproduction end position Y is selected (step 3). The user commands a picture still mode (step 4), and selects a one-play mode or an endless repeat mode (step 5). When the user subsequently inputs an execute command (step 6), the control circuit 228 starts repeat reproduction. In response to the execute command, the control circuit 228 outputs a command for starting a search operation (step 7), and continues the search operation until the input start position X is searched (step 8). When the search operation is completed, a reproduction start is commanded (step 9), and reproduction is performed up to the end position Y. When the reproduction position reaches a position of 2 frames away from the end position Y in the backward direction (step 10), the control circuit 228 outputs a picture still command and causes the memory 220 to hold at least one of the two frames, e.g., the frame at the end position Y shown in Fig. 20. The frame at this end position Y may store a still image different from that of the previous read frame.

If the endless repeat mode is selected in mode selection, when the reproduction position reaches the end position Y (step 12), a rewind/search operation is performed up to the start position X (step 7), and the above-described operation is repeated. If the one-play mode is selected, a rewind/search operation is executed in the same manner as described above (step 14). When the tape is rewound to the start end position X (step 15), the control circuit 228 outputs a stop command and cancels the picture still command (step 16). In response to a repeat stop command (step 17), the reproduction operation is stopped (step 18). With this operation, the tape is stopped at the start position X.

During the above-described rewind/search operation, the contents (still image) held in the memories 220 and 221 are always displayed on the monitor (not shown), thus preventing irritating noise or interruption of image display caused by a rewind operation. A search operation is performed by a known technique and hence is not described here. Reproduction start and end positions can be set either by the values of a tape timer or by the values of a time code. This setting operation is clearly illustrated in Fig. 15. In consideration of the actual response characteristics of a reproducing system, the start timing of the picture still operation is set at the position of 2 frames away from the end position in the backward direction. That is, if a picture command is generated of 2 frames ahead of the end position, an image can be reliably held in a one-frame memory.

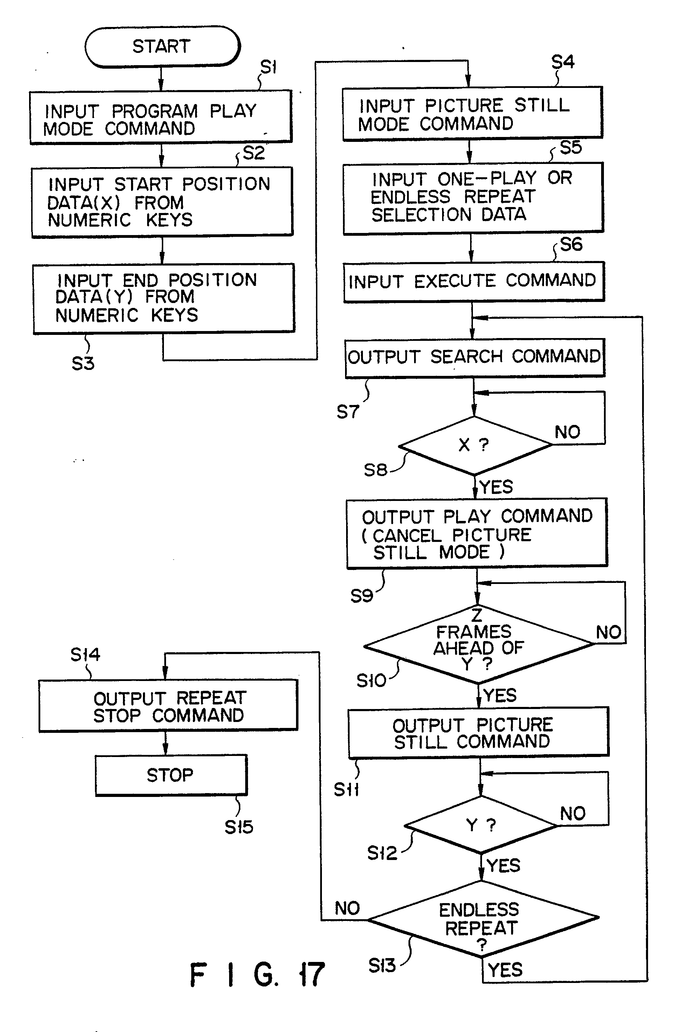

Similar to the above-described operation, in the one-play mode shown in Fig. 17, a picture still command is output at 2 frames away from the end position Y in the backward direction (step 11). At the end position Y (step 12), a rewind operation is stopped (steps 14 and 15). However, the contents held in the memories 220 and 221 may be kept displayed until the picture still mode is canceled.

In the above-described embodiment, the tape contents at substantially the end position Y are displayed as a still image during a rewind operation. As shown in Fig. 19, however, memories 290 and 291 each having a capacity of at least one frame are arranged independently of the memories 220 and 221 so that in the program play mode, a still image at the start position X is held in the memories 290 and 291, and switches 292 and 293 are switched during a rewind/search operation so as to display the still image at the start position X stored in the memories 290 and 291. In addition, an arbitrary tape position M between the start position X and the end position Y of tape reproduction may be externally set so that an image at the set position M is held in the additional memories 290 and 291 as a still image and is displayed during a rewind/search operation.

In the above-described embodiments, a picture still operation during a rewind/search operation is exemplified. However, the present invention can be applied to a fast forward mode. In this case, a plurality of pairs of start and end positions X and Y are set, and one of these combination pairs is designated. More specifically, as shown in Fig. 21, assume that a pair of start and end positions X1 and Y1 and a pair of start and end positions X2 and Y2 are set, and that the pair X1 and Y1 is designated first, and the pair X2 and Y2 is designated next. In this case, after reproduction between the positions X1 and Y1 is completed, the position X2 is searched by a fast forward operation. During this fast forward operation, for example, the image at the position Y1 is displayed as a still image. .

As has been described above, since irritating noise or interruption of picture display during a search operation, a rewind operation or a fast forward operation can be prevented by addition of only a small amount of hardware, the present invention is very effective for a monitor used for, e.g., advertisement.

In the above embodiments, the image memory stores an image data of one frame as a picture of one screen, but may store an image data of one field. In this case, the one-field image data may be converted into one-frame image data by an interpolation technique and displayed on the monitor.

## Claims

1. A picture reproducing apparatus characterized by comprising:
video signal reproducing means (3, 13) for reproducing a video signal recorded in a tape-like recording medium;
image storage means (6, 11) for storing a video signal corresponding to at least one still image; and
switching means (4), coupled to said video signal reproducing means and said image storage means, for selectively switching and outputting the video signal reproduced by said video signal reproducing means and the video signal read out from said image storage means.

2. An apparatus according to claim 1, characterized by further comprising additional switching means (15) for selecting one of a video signal input from an external video signal source and the video signal reproduced by said video signal reproducing means (13) and supplying the signal selected to said image storage means (11).

3. An apparatus according to claim 1, characterized in that said image storage means (6) comprises storage means (35) detachably mounted in said picture reproducing apparatus.

4. An apparatus according to claim 3, characterized in that said image storage means (6) comprises a memory card (35) detachable from said picture reproducing apparatus.

5. An apparatus according to claim 4, characterized in that said memory card comprises a matrix of a plurality of electric erasable programmable read only memories (101 to 106) (EEPROMs), and memory controller means (117) for controlling read operation thereof.

6. An apparatus according to claim 4, characterized in that said memory card comprises a semiconductor memory card (35) for storing the video signal in two channels each including at least two fields.

7. An apparatus according to claim 4, characterized in that said memory card comprises a memory card (35) for storing a predetermined still image signal.

8. An apparatus according to claim 1, characterized in that said image storage means comprises a digital memory (11) for storing a digital still image signal.

9. An apparatus according to claim 1, characterized in that said video signal reproducing means comprises video head means (2) for reading the video signal recorded in said recording medium, and signal processor means (3) for performing signal processing including amplification, equalization, and demodulation with respect to the video signal read by said video head means.

10. An apparatus according to claim 1, characterized in that said switching means comprises switch means (4) for switching to said image storage means (6) so as to output the video signal stored therein during at least one of fast forward and rewind operations.

11. A picture reproducing apparatus characterized by comprising:
mode selecting means (227) for selecting one of reproduction and still modes;
reproducing means (260 to 263) for reproducing a video signal recorded in a tape-like recording medium in response to selection of the reproduction mode;
memory means (220, 221) for storing the video signal reproduced by said reproducing means;
memory control means (218, 219) for writing the video signal reproduced by said reproducing means in said memory means (220, 221) and for reading out the video signal from said memory means (220, 221);
stop means (228) for stopping the writing of the video signal in said memory means in response to selection of the still mode; and
said memory control means (218, 219) including read means for reading out the video signal, which is written in said memory means, in the reproduction mode, and reading out the video signal stored in said memory means as a still image, when said stop means stops a write operation, in the still mode.

12. An apparatus according to claim 11, characterized in that said memory means (220, 221) includes at least three field memories (FM0 to FM2), and said read means comprises access means (276) for sequentially accessing said three field memories in the reproduction mode, and alternately accessing two of said three field memories in the still mode.

13. An apparatus according to claim 11, characterized in that said memory control means (218, 219) includes write means (270) for writing at least a one-frame video signal, which is input immediately before a write operation is stopped by said stop means, in said memory means.

14. An apparatus according to claim 11, characterized in that said memory means includes a still image memory (220) for storing, a video signal first reproduced by said reproducing means, as a still image signal, and said read means (272) reads out the still image signal from said still image memory in the still mode.

15. An apparatus according to claim 11, characterized in that said mode selecting means (227) selects the still mode in response to a search start operation.

16. An apparatus according to claim 11, characterized in that said mode selecting means (227) selects the still mode when a reproduction position reaches a position of two frames away from an end position of the recording medium.

17. A picture reproducing apparatus characterized by comprising:
video signal reproducing means (3, 13) for reproducing a video signal recorded in a recording medium;
image storage means (6, 11) for storing a video signal corresponding to at least one still image; and
switching means (4), coupled to said video signal reproducing means and said image storage means, for selectively switching and outputting the video signal reproduced by said video signal reproducing means and the video signal read out from said image storage means.

18. A picture reproducing method comprising the steps of:
designating reproduction start and end positions of a video signal recorded in a tape-like recording medium;
reproducing the video signal between the reproduction start and end positions from said recording medium, and storing a portion of the video signal which corresponds to at least one frame away from the reproduction end position in a backward direction in a memory; and
rewinding the tape-like recording medium from the reproduction end position to the reproduction start position, and outputting at least a one-frame portion of the video signal stored in said memory during the rewind period.

19. A method according to claim 18, characterized by further comprising the step of repeating reproduction of the video signal from the reproduction start position after the rewind period.

20. A picture reproducing apparatus characterized by comprising:
means (227) for designating reproduction start and end positions of a video signal recorded in a tape-like recording medium;
memory means (220, 221) for storing the video signal;
means (260 to 263) for reproducing the video signal between the reproduction start and end positions from said recording medium, and storing a portion of the video signal which corresponds to at least one frame away from the reproduction end position in a backward direction in said memory means; and
means (290, 291) for outputting at least a one-frame portion of the video signal stored in said memory means during a rewind period during which the tape-like recording medium is rewind from the reproduction end position to the reproduction start position.

F I G. 1

F I G. 2

F I G. 3

F I G. 4

F I G. 5

F I G. 6

F I G. 7

F I G. 9

F I G. 8

F I G. 10

EP 0 402 135 A2

F I G. 11

CHANNEL A

CHANNEL B

F I G. 12

EP 0 402 135 A2

EP 0 402 135 A2

F I G. 13

F I G. 14

CURRENT
POSITION(1)

SEARCH

CURRENT
POSITION(2)

SEARCH

2 FRAMES

Y

X

START
POSITION

PLAY

END
POSITION – 2 FRAMES

PICTURE
STILL
COMMAND

END
POSITION

PIX STILL

REW

CANCEL PICTURE
STILL MODE

PLAY

LONGITUDINAL DIRECTION
OF TAPE (TAPE POSITION)

F I G. 15

EP 0 402 135 A2

FIG. 16

START

INPUT PROGRAM PLAY MODE COMMAND — S1

INPUT START POSITION DATA(X) FROM NUMERIC KEYS — S2

INPUT END POSITION DATA(Y) FROM NUMERIC KEYS — S3

INPUT PICTURE STILL MODE COMMAND — S4

INPUT ONE-PLAY OR ENDLESS REPEAT SELECTION DATA — S5

INPUT EXECUTE COMMAND — S6

OUTPUT SEARCH COMMAND — S7

X ? — S8 — NO / YES

OUTPUT PLAY COMMAND (CANCEL PICTURE STILL MODE) — S9

Z FRAMES AHEAD OF Y ? — S10 — NO / YES

OUTPUT PICTURE STILL COMMAND — S11

Y ? — S12 — NO / YES

ENDLESS REPEAT ? — S13 — NO / YES

OUTPUT REPEAT STOP COMMAND — S14

STOP — S15

F I G. 17

E : EVEN FIELD
O : ODD FIELD

| | E | O | E | O | E | O | E | O | E | O | E |

VD

ODD/EVEN

DECODER OUTPUT 0

DECODER OUTPUT 1

DECODER OUTPUT 2

PICTURE STILL COMMAND

FMW STOP

WSEL 0

WSEL 1

WSEL 2

RSEL 0

RSEL 1

RSEL 2

PERIOD OF PICTURE STILL OPERATION

F I G. 18

EP 0 402 135 A2

F I G. 19

F I G. 20

F I G. 21